# EUROPÄISCHE PATENTSCHRIFT

(11) **EP 0 749 628 B1**
(45) Veröffentlichungstag und Bekanntmachung des Hinweises auf die Patenterteilung: **08.09.1999**
(21) Anmeldenummer: 95910445.6
(22) Anmeldetag: 22.02.1995
(51) Int. Cl.: H01H 11/00

(54) **EINRICHTUNG ZUR FUNKTIONSSICHERHEITSÜBERWACHUNG VON LEISTUNGSSCHALTEINRICHTUNGEN (DIAGNOSEGERÄT)**
DEVICE FOR MONITORING THE OPERATION SAFETY OF POWER SWITCHES (DIAGNOSIS APPARATUS)
DISPOSITIF POUR LE CONTROLE DE LA SECURITE DE FONCTIONNEMENT D'INSTALLATIONS DE DISJONCTEURS DE PUISSANCE (APPAREIL DE DIAGNOSTIC)

(30) Priorität: 09.03.1994 DE 4408631
(43) Veröffentlichungstag der Anmeldung: 27.12.1996
(73) Patentinhaber: SIEMENS AKTIENGESELLSCHAFT, 80333 München (DE)
(72) Erfinder: ANGER, Nils, D-10179 Berlin (DE); REINERT, Werner, D-13403 Berlin (DE); HILPERT, Johannes, D-96129 Strullendorf (DE)
(86) Internationale Anmeldenummer: DE9500296
(87) Internationale Veröffentlichungsnummer: WO9524725

(56) Entgegenhaltungen:
- WO-A-93/23760
- US-A- 4 945 256

## Beschreibung

Die Erfindung betrifft eine Einrichtung zur Funktionssicherheitsüberwachung von Leistungsschalteinrichtungen, insbesondere von Vakuumleistungsschalter in Mittelspannungsschaltanlagen, mit datenverarbeitenden Mikroprozessoreinheiten bestehend aus einem Mikroprozessor, einer Mikroprozessorsteuerung und einer prozessororientierten Speichereinrichtung, mit Stromerfassungseinrichtungen zur Erkennung und Umwertung eines Nennstromes der Leistungschalteinrichtung und der Erkennung und Umwertung eines den Antrieb des beweglichen Teils der Leistungsschalteinrichtung bewirkenden Motorstroms, und mit einer Stromerfassungseinrichtung mit Stromwandlern zur Signalanpassung

Eine derart definierte Einrichtung zur Funktionssicherheitsüberwachung von Leistungsschalteinrichtungen ist aus der WO 93/23760 bekannt.
Hier werden unterschiedliche Betriebsparameter von kritischen Leistungsschaltanlagen durch entsprechende Überwachungseinrichtungen registriert und in überwachungsindividuellen Speichereinrichtungen abgespeichert. Anschließend werden diese Daten von einer übergeordneten Rechnereinheit abgefragt und mit bereits vorhandenen Daten unkritisch arbeitender Leistungsschaltanlagen verglichen und ausgewertet. Bei größeren Abweichungen können im Bedarfsfall Wartungsvorgänge veranlaßt oder auch gänzliche Abschaltvorgänge ausgelöst werden.

Ein Prüfgrogramm zur Ermittlung von umgebungsbedingten Einflüssen auf die obengenannten Leistungsschalteinrichtungen ist beispielsweise durch die Veröffentlichung "Developments in Design and Performance of EHV Switching Equipment", IEEE Conference Publication Number 182, 1979, Seiten 126 bis 129 beschrieben. Danach werden elektrische Schaltleistungsprüfungen mit Hilfe einer synthetischen Prüfschaltung sowie einer Reihe mechanischer Untersuchungen vorgenommen, um beispielsweise im Verlauf von einer bestimmten Anzahl von abgelaufenen Schaltvorgängen u. a. das Schaltvermögen der eigentlichen Schaltstücke sowie deren Übergangswiderstand und die unmittelbare Umgebung der Schaltstücke, wie beispielsweise die Gasdruckverhältnisse, zu prüfen. Außerdem werden mechanische Belastungen sich bewegender Teile der Leistungsschalteinrichtungen untersucht, um so in Abhängigkeit der Häufigkeit des Schaltens auf funktionssicherheitsrelvante Daten der Leistungsschalteinrichtungen schließen zu können.

Aus der DE 41 31 828 ist außerdem ein Verfahren zur Überprüfung der mechanischen Funktionen eines Umwelteinflüssen ausgesetzten elektrischen Schaltgerätes beschrieben, mit dem durch Reihenuntersuchungen beispielsweise die Schwankungen von Federspeichern, unterschiedliche Belastungen durch Reibung von Lagern und ähnliche Erscheinungen festgestellt und ausgewertet werden. Ziel dieses bekannten Verfahrens ist es, durch die derart ermittelten Vergleichsdaten Rückschlüsse auf den Zustand und den Einsatzzweck einer gerade aktuell überprüften Leistungsschalteinrichtung ziehen zu können. So wird u. a. die Drehgeschwindigkeit der Schaltwelle mit einem in der Elektrotechnik gebräuchlichen Weggeber erfaßt und unter den bestehenden Umgebungseinflüssen durch Berechnung entsprechende Schaltenergiewerte dazu ermittelt. Sofern genügend Vergleichswerte dieser Lastschalteinrichtungen aus Messungen und Berechnungen von zuvor untersuchten Leistungsschalteinrichtungen der gleichen Art vorliegen, können die Grenzen des Einsatzbereiches der gerade aktuell untersuchten Leistungsschalteinrichtung durch eine vergleichende Betrachtung erkannt werden.
Die der Erfindung zugrundeliegende Aufgabe besteht darin, diese bekannten Verfahren hinsichtlich ihrer Auswertung wesentlich zu erweitern und insbesondere die einzelnen Verfahrensschritte so zu präzisieren, daß zu den im Normalvorhandenen rein mechanischen Gegebenheiten möglichst sämtliche relevanten Einflußgrößen zur Bewertung der Funktionssicherheit derartiger Leistungsschalteinrichtungen mit einbezogen werden können. Erfindungsgemäß wird dies durch die folgenden Merkmale erreicht:
1.1 die Mikroprozessoreinheit steht mit einer WinkelimpulsDrehrichtungs-Erkennungseinrichtung in Verbindung, die die Umsetzung einer Bewegung eines beweglichen Teils der jeweiligen Leistungsschalteinrichtung in mikroprozessorverarbeitbare Daten bewirkt, die in der Speichereinrichtung prozessororientiert gespeichert sind,
1.2 der Stromerfassungseinrichtung sind ein Stromspannungswandler und eine Störspannungsfiltereinrichtung nachgeschaltet, deren Stromwerte als Daten in der Speichereinrichtung prozessororientiert gespeichert sind,
1.3 die Mikroprozessoreinheit ist mit einer die Umgebungstemperatur in der Leistungsschalteinrichtung erfassenden Sensoreinrichtung verbunden, deren Ausgangssignal über eine Filtereinheit und eine Analog-Digital-Wandlereinheit der Mikroprozessoreinrichtung zugeführt und als Daten in der Speichereinrichtung prozessororientiert gespeichert sind,
1.4 die Mikroprozessoreinheit ist mit einer Schaltfunktionen der jeweiligen Leistungsschalteinrichtung erkennenden digitalen Eingabeeinrichtung verbunden, deren eingehende Signale über eine weitere Filtereinrichtung und eine Impulsformeinrichtung der Mikroprozessoreinheit zugeführt und als Daten in der Speichereinrichtung prozessororientiert gespeichert sind,
1.5 die Mikroprozessoreinheit steht mit einer Eingangssteuersignale empfangenden Schnittstellenumsetzeinheit in Verbindung,
1.6 die in der Speichereinrichtung prozessororientiert gespeicherten Daten sind von der digitalen Eingabeeinrichtung, mit der die Schaltfunktionen der jeweiligen Leistungsschalteinrichtung erkannt werden, mittels geeigneter Verknüpfungsmechanismen prozessororientiert abrufbar.

Mit dem Einsatz einer derartig definierten Mikroprozessoreinheit als Einrichtung zur Funktionsüberwachung von Leistungsschalteinrichtungen lassen sich sämtliche Betriebsparameter direkt als unberechnete Dateninformation eingeben und mittels geeigneter Verknüpfungsmechanismen Daten produzieren, aus denen man durch entsprechende statistische Bewertungen Rückschlüsse über den Zustand der aktuell untersuchten Leistungsschalteinrichtung ziehen kann. Ein wesentlicher Bestandteil dieser erfindungsgemäßen Einrichtung enthält die Winkelimpuls-Drehrichtungs-Erkennungeinrichtung, mit der sowohl die Größe und der Verlauf des Schaltwinkels der Schaltwelle innerhalb bestimmter Zeitabläufe als auch die Drehwinkelgeschwindigkeit selbst als Datenwert an den Mikroprozessor übertragen werden kann. Gleichzeitig steht dem Mikroprozessor mit der Stromerfassungseinrichtung eine Stromerfassung in zweifacher Hinsicht zur Verfügung. Zum einen wird der durch den Motor zum Aufzug des Federantriebes fließende Motorstrom und zum anderen der im Stromwandler erzeugte Spulenstrom gemessen. Die eigentliche Stromerfassungseinrichtung besteht im wesentlichen aus zwei Teilen, den eigentlichen Stromwandler und der Signalanpassung mit der Filtereinheit zur Eleminierung von gegebenenfalls eingestreuten Störspannungen. Das von dem Stromwandler erzeugte Ausgangssignal ist dabei proportional dem fließenden Nennstrom, so daß beispielsweise bei einem Nennstrom von 100A im Wandler durch einen Wechselstrom von 100 mA repräsentiert sein kann. Dieser Wechselstrom wird in bekannter Weise in eine von einem AD-Wandler des Mikroprozessors verarbeitbare Spannung umgesetzt, gleichgerichtet und gefiltert.
Darüber hinaus wird mit der Sensoreinrichtung die Umgebungstemperatur innerhalb der Leistungsschalteinrichtung erfaßt und gleichermaßen über die Filtereinrichtung und einem AD-Wandler dem Mikroprozessor zugeführt.
Mit der digitalen Eingabeeinrichtung sind im Servicedienst die einzelnen Schaltfunktionen der Leistungsschalteinrichtungen, insbesondere der Leistungsschalter, abzufragen. Dazu wird eine definierte Meßspannung an die verketteten Leistungsschalteinrichtungen angelegt und die entsprechend eingehenden Signale über die weitere Filtereinrichtung und die nachgeschaltete Impulsformeinrichtung an den Mikroprozessor übertragen.

Gemäß einer vorteilhaften Ausgestaltung der Erfindung ist nach Patentanspruch 2 vorgesehen, daß
2.1 die Speichereinrichtung mit einem Speicherbereich ausgestattet ist, der durch einen wahlfreien Zugriffsspeicher und einen löschbar programmierbaren Nur-Lese-Speicher repräsentiert ist, und daß
2.2 die Speichereinrichtung mit der Mikroprozessoreinheit über eine Mehrfach-Datenübertragungseinheit in Verbindung steht.

Die Speichereinrichtung ist dabei so konfiguriert, daß der untere Adressenbereich im externen wahlfreien Zugriffspeicher angeordnet ist, um so beispielsweise den schnellen Datentransfer bei einer fotoelektrischen Oszillogrammerstellung nutzen zu können.
Darüber hinaus wird der durch die Initialisierung bedingte Datenaustausch zwischen den programmierbaren Nur-Lese-Speicher und dem wahlfreien Zugriffsspeicher durch die Mehrfach-Datenübertragungseinheit gesteuert.

Gemäß einer weiteren vorteilhaften Ausgestaltung der Erfindung ist nach Patentanspruch 3 vorgesehen, daß
3.1 der löschbar programmierbare Nur-Lese-Speicher einen Schreib- und Löschvorgang durch schnelle Schreibvorgänge der Mikroprozessoreinheit aufnehmenden Schnellzugriffsbereich enthält, deren Zustand in einem darin integrierten Statusregister gespeichert und auch während der Schreib-Löschvorgänge abrufbar ist.

Damit kann der Mikroprozessor die Abläufe und Ergebnisse der iniziierten Vorgänge durch einfache Lesezugriffe auf das Statusregister feststellen. Um eine vollständige Programmierbarkeit durch den Anwender zu ermöglichen, wäre es auch denkbar, den Nur-Lese-Speicher gänzlich durch einen Schnellzugriffsspeicher zu ersetzen. Allerdings unterliegt der Einsatz von programmierbaren Logikbausteinen in einem Kernbereich des Mikroprozessors zum Zwecke einer freien Konfigurierbarkeit verstärkt der Beachtung der Betriebssicherheit, wobei insbesondere auch das Zeitverhalten der programmierbaren Speichereinrichtungen auf einander abgestimmt sein muß.

Eine weitere vorteilhafte Ausgestaltung der Erfindung sieht gemäß Patentanspruch 4 vor, daß
4.1 die Mikroprozessorsteuerung mit einem Spannungsdetektor ausgestattet ist, der beim Unterschreiten einer minimal zulässigen Versorgungsspannung der Mikroprozessoreinheit ein Störfallsignal erzeugt, und daß
4.2 das Störfallsignal der Mikroprozessoreinheit als Netzausfallsignal übertragbar ist.

Damit ist sichergestellt, daß die Einrichtung im Falle von nicht zulässigen Spannungsschwankungen mit Hilfe des Störfallsignals abgeschaltet ist und somit keine Fehldaten für die Funktionssicherheitsüberwachung herangezogen werden können.

Eine weitere vorteilhafte Ausgestaltung der Erfindung sieht gemäß Patentanspruch 5 vor, daß
5.1 die Mikroprozessoreinheit in Multilayeranordnung auf einer außerhalb der Leistungsschalteinrichtungen installierbaren Flachbaugruppe angeordnet ist, und daß
5.2 der Mikroprozessoreinheit eine die Anzahl der sensorisch erfaßbaren Funktionsüberwachungen entsprechende Zahl von elektromagnetisch abschirmbaren Steckverbinderleitungen zugeführt wird.

Mit dieser Anordnung kann die Einrichtung zur Funktionssicherheitsüberwachung der Leistungsschalteinrichtungen in einfacher Weise mit den zu überwachenden Leistungsschalteinrichtungen verbunden und die zur Auswertung notwendigen Daten ohne Schwierigkeiten erfaßt werden.

Die Erfindung wird in einem figürlich dargestellten Ausführungsbeispiel näher erläutert, in dem die einzelnen untereinander verknüpften Funktionsbausteine zur Funktionssicherheitsüberwachung der Leistungsschalteinrichtungen der besseren Übersicht wegen nur auszugsweise dargestellt sind.

Die Einrichtung zur Funktionssicherheitsüberwachung von Leistungsschalteinrichtungen enthält die datenverarbeitenden Mikroprozessoreinheit ME, die im wesentlichen aus dem Mikroprozessor MP mit der entsprechenden Mikroprozessorsteuerung MS und der prozessororientierten Speichereinrichtung SP besteht. An den Mikroprozessor MP wird mit Hilfe der Winkelimpuls-Drehrichtungs-Erkennungseinrichtung WD die Bewegung des beweglichen Teils der jeweiligen Leistungsschalteinrichtung in Form von mikroprozessorverarbeitbaren Daten übertragen. Weiterhin ist die Mikroprozessoreinheit ME mit einer Stromerfassungseinrichtung SE verbunden, die der Erkennung und Umwertung des Nennstromes der Leistungsschalteinrichtung in einen Spulenstrom SS und der Erkennung und Umwertung des den Antrieb des beweglichen Teils der Leistungsschalteinrichtungen bewirkenden Motorstroms SM dient. Die Stromerfassungseinrichtung SE enthält zusätzlich den Stromspannungswandler I/U, der im Zusammenwirken mit der Stärspannungsfiltereinheit SF die Winkelimpuls-Drehrichtungsdaten direkt an den Mikroprozessor MP überträgt. Darüber hinaus wird der Mikroprozessoreinheit ME mit der die Umgebungstemperatur in der Leistungsschalteinrichtung erfassenden Sensoreinrichtung SN Ausgangssignale übertragen, die in gleicher Weise über die Filtereinheit FE und der Analog-Digital-Wandlereinheit AD an den Mikroprozessor MP übertragen werden. Mit einer nicht näher dargestellten digitalen Eingabeeinrichtung EG, mit der die Schaltfunktionen der jeweiligen Lastleistungsschalteinrichtung erkannt werden, werden deren eingehende Signale L1 bis L3 ebenfalls über eine Filtereinrichtung FI geführt, um anschließend unter dem Steuereinfluß der Impulsformeinrichtung ST ebenfalls an den Mikroprozessor MP übertragen werden zu können. Mit der Schnittstellenumsetzeinheit SU können entsprechende Eingangssignale zur Steuerung der Mikroprozessoreinheit ME direkt an den Mikroprozessor MP eingegeben werden.

Die Speichereinrichtung SP der Mikroprozessoreinheit ME wird sowohl durch den wahlfreien Zugriffsspeicher RAM als auch durch den lösbar programmierbaren Nur-Lese-Speicher EPROM präsentiert, wobei deren gezielte Datensteuerung über die Mehrfach-Datenübertragungseinheit MUX erfolgt. Wie aus dem Ausführungsbeispiel erkennbar, enthält der löschbar programmierbare Nur-Lese-Speicher EPROM einen Schnellzugriffsbereich Flash-EPROM, um damit die Schreib- und Löschvorgänge, verursacht durch schnelle Schreibvorgänge beim Produzieren von Oszillogrammen, zu ermöglichen.
Die Mikroprozessorsteuerung MS enthält außerdem einen nicht dargestellten Spannungsdetektor, der beim Unterschreiten einer minimal zulässigen Versorgungsspannung durch die Versorgungsspannungseinrichtung VS das Netzausfallsignal NAU erzeugt, daß zum Abbruch der Datenermittlung bei der Funktionssicherheitsüberwachung der Leistungsschalteinrichtungen führt.

Die komplette Einrichtung ist in multilayer Technik auf einer Flachbaugruppe angeordnet, die sich ggf. auch außerhalb der zu diagnostizierenden Leistungsschalteinrichtungen befinden kann. Die durch entsprechende Sensoren innerhalb der Leistungsschalteinrichtungen ermittelten Informationen werden über elektromagnetisch abschirmbaren Steckverbinderleitungen der Flachbaugruppe direkt zugeführt. Die unmittelbar erfaßbaren und in Oszillogrammen festgehaltenen Größen, wie beispielsweise Motor-, Auslöse- und Kurzschlußströme, Betriebsspannungen sowie Drehwinkelveränderungen in Wertangaben und Geschwindigkeiten bei entsprechenden Temperaturänderungen, dienen sämtlichst zur individuellen Charakterisierung der jeweils untersuchten Leistungsschalteinrichtung, so daß gesicherte Aussagen über deren Motor- und Schaltfunktionen vorliegen.
Die individuellen Leistungsschalteinrichtungswerte können dann je nach Bedarf einer temperatur-, spannungs- und/oder zeitkompensierten Klassifizierung unterzogen werden, so daß bei entsprechend großer Anzahl von Vergleichswerten einer bestimmten Art von Anlagentypen beispielsweise die Streubandbreiten bestimmter Einzelmerkmale produzierbar sind. Damit sind Aussagen über die Verfügbarkeit derartiger Leistungsschalteinrichtungen im Ist-Zustand möglich und können vor Ort sowohl zur Abnahme als auch zur Inbetriebsetzung der Leistungsschalteinrichtungen herangezogen werden.

In diesem Zusammenhang ist es auch denkbar, derartige Einrichtungen als festen Bestandteil einer vollständig installierten Leistungsschalteinrichtung vorzusehen und mit einer periodischen Aufzeichnung von Zustandsveränderungen über einen gewissen Zeitabschnitt einer Art Lebenslaufprotokoll zu dokumentieren, das beispielsweise im Servicedienst zu Wartungszwecken herangezogen werden kann. Durch geeignete Auswertung und Umsetzung dieser Daten können gegebenenfalls Wartungsnotwendigkeiten auch unmittelbar an die dafür zuständigen Schaltwarten übertragen werden.
Mit diesen Einrichtungen können darüber hinaus auch Aussagen und Prognosen über das zukünftige Funktionsverhalten der Leistungsschalteinrichtung getroffen werden, wodurch deren Funktionssicherheit erheblich gesteigert ist. Andererseits ist mit dem Einsatz dieser Einrichtung für den Fall, daß die Anlagen zuverlässig arbeiten, eine erhebliche Verlängerung der Wartungsintervalle und damit eine präventive Schadensbegrenzung erreichbar.

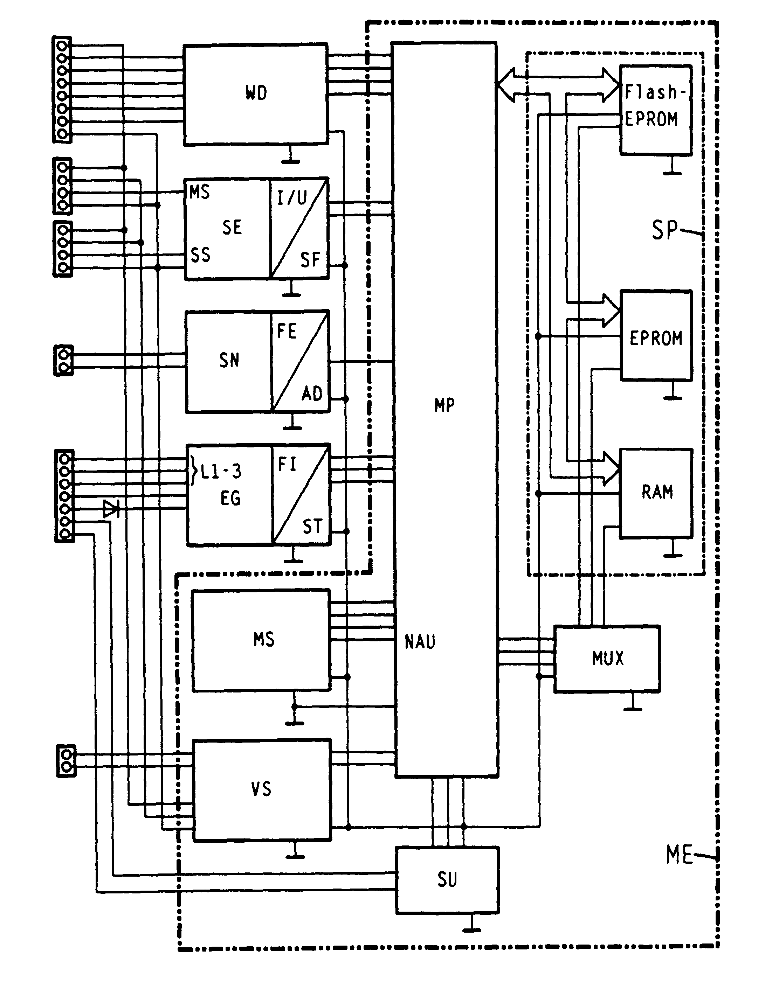

## Patentansprüche

1. Einrichtung zur Funktionssicherheitsüberwachung von Leistungsschalteinrichtungen, insbesondere von Vakuumleistungsschalter in Mittelspannungsschaltanlagen, mit datenverarbeitenden Mikroprozessoreinheiten bestehend aus einem Mikroprozessor , einer Mikroprozessorsteuerung und einer prozessororientierten Speichereinrichtung, mit Stromerfassungseinrichtungen zur Erkennung und Umwertung eines Nennstromes der Leistungschalteinrichtung und der Erkennung und Umwertung eines den Antrieb des beweglichen Teils der Leistungsschalteinrichtung bewirkenden Motorstroms, und mit einer Stromerfassungseinrichtung mit Stromwandlern zur Signalanpassung,
**gekennzeichnet durch** die Merkmale
1.1 die Mikroprozessoreinheit (ME) steht mit einer Winkelimpuls-Drehrichtungs-Erkennungseinrichtung (WD) in Verbindung, die die Umsetzung einer Bewegung eines beweglichen Teils der jeweiligen Leistungsschalteinrichtung in mikroprozessorverarbeitbare Daten bewirkt, die in der Speichereinrichtung (SP)prozessororientiert gespeichert sind,
1.2 der Stromerfassungseinrichtung (SE) sind ein Stromspannungswandler (I/U) und eine Störspannungsfiltereinrichtung (SF) nachgeschaltet, deren Stromwerte als Daten in der Speichereinrichtung (SP) prozessororientiert gespeichert sind,
1.3 die Mikroprozessoreinheit (ME) ist mit einer die Umgebungstemperatur in der Leistungsschalteinrichtung erfassenden Sensoreinrichtung (SN) verbunden, deren Ausgangssignal über eine Filtereinheit (FE) und eine Analog-Digital-Wandlereinheit (AD) der Mikroprozessoreinrichtung (ME) zugeführt und als Daten in der Speichereinrichtung (SP) prozessororientiert gespeichert sind,
1.4 die Mikroprozessoreinheit (ME) ist mit einer Schaltfunktionen der jeweiligen Leistungsschalteinrichtung erkennenden digitalen Eingabeeinrichtung (EG) verbunden, deren eingehende Signale (L1-3) über eine weitere Filtereinrichtung (FI) und eine Impulsformeinrichtung (ST) der Mikroprozessoreinheit (ME) zugeführt und als Daten in der Speichereinrichtung (SP) prozessororientiert gespeichert sind,
1.5 die Mikroprozessoreinheit (ME) steht mit einer Eingangssteuersignale empfangenden Schnittstellenumsetzeinheit (SU) in Verbindung,
1.6 die in der Speichereinrichtung (SP) prozessororientiert gespeicherten Daten sind von der digitalen Eingabeeinrichtung (EG), mit der die Schaltfunktionen der jeweiligen Leistungsschalteinrichtung erkannt werden, mittels geeigneter Verknüpfungsmechanismen prozessororientiert abrufbar.

2. Einrichtung zur Funktionssicherheitsüberwachung von Leistungsschalteinrichtungen nach Anspruch 1,
**gekennzeichnet durch** die Merkmale
2.1 die Speichereinrichtung (SP) ist mit einem Speicherbereich ausgestattet, der durch einen wahlfreien Zugriffsspeicher (RAM) und einen löschbar programmierbaren Nur-Lese-Speicher (EPROM) repräsentiert ist,
2.2 die Speichereinrichtung (SP) steht mit der Mikroprozessoreinheit (ME) über eine Mehrfach-Datenübertragungseinheit (MUX) in Verbindung.

3. Einrichtung zur Funktionsüberwachung von Leistungsschalteinrichtungen nach Anspruch 2,
**gekennzeichnet durch** das Merkmal
3.1 der löschbar programmierbare Nur-Lese-Speicher (EPROM) enthält einen Schreib- und Löschvorgang durch schnelle Schreibvorgänge der Mikroprozessoreinheit (ME) aufnehmenden Schnellzugriffsbereich (Flash-EPROM), deren Zustand in einem darin integrierten Statusregister gespeichert und auch während der Schreib-Löschvorgänge abrufbar ist.

4. Einrichtung zur Funktionsüberwachung von Leistungsschalteinrichtungen nach Anspruch 1,
**gekennzeichnet durch** die Merkmale
4.1 die Mikroprozessorsteuerung (MS) ist mit einem Spannungsdetektor ausgestattet, der beim Unterschreiten einer minimal zulässigen Versorgungsspannung der Mikroprozessoreinheit (ME) ein Störfallsignal erzeugt,
4.2 das Störfallsignal ist der Mikroprozessoreinheit (ME) als Netzausfallsignal (NAU) übertragbar.

5. Einrichtung zur Funktionsüberwachung von Leistungsschalteinrichtungen nach einem der vorangegangenen Ansprüche 1 bis 4,
**gekennzeichnet durch** die Merkmale
5.1 die Mikroprozessoreinheit (ME) ist in Multilayeranordnung auf einer Flachbaugruppe angeordnet,
5.2 der Mikroprozessoreinheit (ME) sind eine die Anzahl der sensorisch erfaßbaren Funktionsüberwachungen entsprechende Zahl von elektromagnetisch abschirmbaren Steckverbinderleitungen zugeführt.

## Claims

1. Device for monitoring the operational reliability of power switching devices, in particular vacuum circuit-breakers in medium-voltage switchgear, having data-processing microprocessor units comprising a microprocessor, a microprocessor control and a processor-oriented memory device, having current-detection devices for recognition and conversion of a nominal current of the power switching device and recognition and conversion of a motor current which effects the drive of the movable portion of the power switching device, and having a current-detection device with current transformers for signal matching,
characterised by the features
1.1 the microprocessor unit (ME) is connected to an angular-impulse direction-of-rotation recognition device (WD), which effects the conversion of a movement of a movable portion of the respective power switching device into microprocessorprocessable data, which is stored in the memory device (SP) in a processor-oriented manner,
1.2 connected downstream of the current-detection device (SE) are a current-to-voltage transformer (I/U) and an interference-voltage filter device (SF), the current values of which are stored as data in the memory device (SP) in a processor-oriented manner,
1.3 the microprocessor unit (ME) is connected to a sensor device (SN) which detects the ambient temperature in the power switching device and the output signal of which is supplied by way of a filter unit (FE) and an analog-to-digital converter unit (AD) to the microprocessor device (ME) and stored as data in the memory device (SP) in a processor-oriented manner,
1.4 the microprocessor unit (ME) is connected to a digital input device (EG) which recognises switching functions of the respective power switching device and the incoming signals (L1-3) of which are supplied by way of a further filter device (FI) and a pulse-shaping device (ST) to the microprocessor unit (ME) and stored as data in the memory device (SP) in a processor-oriented manner,
1.5 the microprocessor unit (ME) is connected to an interface conversion unit (SU) which receives control input signals, and
1.6 the data stored in the memory device (SP) in a processor-oriented manner can be retrieved in a processor-oriented manner by the digital input device (EG), with which the switching functions of the respective power switching device are recognised, by means of suitable logic mechanisms.

2. Device for monitoring the operational reliability of power switching devices according to claim 1, characterised by the features
2.1 the memory device (SP) is provided with a memory area which is represented by a random access memory (RAM) and an erasable programmable read-only memory (EPROM), and
2.2 the memory device (SP) is connected to the microprocessor unit (ME) by way of a multiple data transfer unit (MUX).

3. Device for monitoring the operation of power switching devices according to claim 2, characterised by the feature
3.1 the erasable programmable read-only memory (EPROM) contains a rapid-access area (Flash-EPROM) which starts a writing and erasing process by fast writing processes of the microprocessor unit (ME), the state of which is stored in an integrated status register and can also be retrieved during the writing-erasing processes.

4. Device for monitoring the operation of power switching devices according to claim 1, characterised by the features
4.1 the microprocessor control (MS) is provided with a voltage detector which, if a minimum permissible supply voltage of the microprocessor unit (ME) is fallen short of, generates a fault signal, and
4.2 the fault signal can be transmitted to the microprocessor unit (ME) as a power failure signal (NAU).

5. Device for monitoring the operation of power switching devices according to one of the preceding claims 1 to 4, characterised by the features
5.1 the microprocessor unit (ME) is arranged in multilayer arrangement on a printed-circuit board, and
5.2 there are supplied to the microprocessor unit (ME) a number of electromagnetically screenable plug-in connecting lines that corresponds to the number of sensorily detectable function monitorings.

## Revendications

1. Dispositif pour le contrôle de la sécurité de fonctionnement d'installations de disjoncteurs de puissance, notamment de disjoncteurs de puissance à vide dans des installations de distribution de moyenne tension, comprenant des unités à microprocesseurs traitant des données et constituées d'un microprocesseur, d'une commande de microprocesseur et d'un dispositif de mémorisation conçu pour le processeur, des dispositifs de détection de courant pour détecter et convertir un courant nominal de l'installation de disjoncteur de puissance et pour détecter et convertir un courant de moteur provoquant l'entraînement de la partie mobile de l'installation de disjoncteur de puissance, et un dispositif de détection de courant comportant des transformateurs de courant pour l'adaptation de signal,
caractérisé par le fait que
1.1 l'unité à microprocesseur (ME) est en liaison avec un dispositif de détection du sens de rotation d'impulsion d'angle (WD), qui provoque la conversion d'un mouvement d'une partie mobile de l'installation de disjoncteur de puissance respective en des données qui peuvent être traitées par un microprocesseur et qui sont mémorisées dans le dispositif de mémorisation (SP) conçu pour le processeur,
1.2 un transformateur courant-tension (I/U) et un dispositif de filtrage de tension parasite (SF) sont branchés du côté aval du dispositif de détection de courant (SE) et leurs valeurs de courant sont mémorisées comme données dans le dispositif de mémorisation (SP) conçu pour le processeur,
1.3 l'unité à microprocesseur (ME) est reliée à un dispositif capteur (SN) qui détecte la température ambiante dans l'installation de disjoncteur de puissance et dont le signal de sortie est envoyé par l'intermédiaire d'une unité de filtrage (FE) et d'une unité de conversion analogique-numérique (AD) au dispositif à microprocesseur (ME) et est mémorisé comme données dans le dispositif de mémorisation (SP) conçu pour le processeur,
1.4 l'unité à microprocesseur (ME) est reliée à un dispositif d'entrée numérique (EG) qui détecte des fonctions de commutation de l'installation de disjoncteur de puissance respective et dont les signaux entrants (L1 à L3) sont envoyés par l'intermédiaire d'un autre dispositif de filtrage (FI) et d'un dispositif de mise en forme d'impulsion (ST) à l'unité à microprocesseur (ME) et sont mémorisés comme données dans le dispositif de mémorisation (SP) conçu pour le processeur,
1.5 l'unité à microprocesseur (ME) est en liaison avec une unité de conversion d'interface (SU) recevant des signaux de commande d'entrée,
1.6 les données mémorisées dans le dispositif de mémorisation (SP) conçu pour le processeur peuvent être interrogées par le dispositif d'entrée numérique (EG), lequel les fonctions de commutation de l'installation de disjoncteur de puissance respective sont détectées, au moyen de mécanismes combinatoires appropriés et conçus pour le processeur.

2. Dispositif pour le contrôle de la sécurité de fonctionnement d'installations de disjoncteurs de puissance selon la revendication 1,
caractérisé par le fait que
2.1 le dispositif de mémorisation (SP) est équipé d'une zone de mémoire qui est représentée par une mémoire à accès aléatoire (RAM) et par une mémoire morte programmable effaçable (EPROM), et que
2.2 le dispositif de mémorisation (SP) est en liaison avec l'unité à microprocesseur (ME) par l'intermédiaire d'une unité de transmission de données multivoie (MUX).

3. Dispositif pour le contrôle de la sécurité de fonctionnement d'installations de disjoncteurs de puissance selon la revendication 2,
caractérisé par le fait que
3.1 la mémoire morte programmable effaçable (EPROM) contient une zone à accès rapide (Flash-EPROM) qui prend en charge des opérations d'écriture et d'effacement dues à des opérations d'écritures rapides de l'unité à microprocesseur (ME) et dont l'état est mémorisé dans un registre d'état intégré à l'intérieur et peut aussi être interrogé pendant les opérations d'écriture et d'effacement.

4. Dispositif pour le contrôle de la sécurité de fonctionnement d'installations de disjoncteurs de puissance selon la revendication 1,
caractérisé par le fait que
4.1 la commande de microprocesseur (MS) est équipée d'un détecteur de tension qui produit un signal de panne lorsque la tension est inférieure à une tension d'alimentation minimale autorisée pour l'unité à microprocesseur (ME), et que
4.2 le signal de panne peut être transmis comme signal de panne de secteur (MAU) à l'unité à microprocesseur (ME).

5. Dispositif pour le contrôle de la sécurité de fonctionnement d'installations de disjoncteurs de puissance selon l'une des revendications précédentes 1 à 4,
caractérisé par le fait que
5.1 l'unité à microprocesseur (ME) est agencée en une disposition multicouche sur un module plat, et que
5.2 des lignes de connecteurs à fiches protégées de façon électromagnétique, en un nombre correspondant au nombre des contrôles de fonctionnement pouvant être détectés par capteurs, sont envoyées à l'unité à microprocesseur (ME).
